# EUROPÄISCHE PATENTSCHRIFT

(11) **EP 3 208 215 B1**
(45) Veröffentlichungstag und Bekanntmachung des Hinweises auf die Patenterteilung: **03.07.2019**
(21) Anmeldenummer: 17154842.3
(22) Anmeldetag: 06.02.2017
(51) Int. Cl.: B65G 47/88, B23Q 7/03

(54) **FÖRDEREINRICHTUNG ZUM TRANSPORT VON WERKSTÜCKTRÄGERN VON UND ZU EINER ODER MEHREREN BEARBEITUNGSMASCHINEN.**
TRANSPORT DEVICE TO TRANSPORT WORKLOAD CARRYING DEVICES FROM OR TO ONE OR MORE MACHINE TOOLS
CONVOYEUR-TRANSPORTEUR POUR LE TRANSPORT DE PORTE-PIÈCES DEPUIS OU JUSQU'À UNE OU PLUSIEURS MACHINES-OUTILS

(30) Priorität: 22.02.2016 DE 102016002048
(43) Veröffentlichungstag der Anmeldung: 23.08.2017
(73) Patentinhaber: Liebherr-Verzahntechnik GmbH, 87437 Kempten (DE)
(72) Erfinder: Kennerknecht, Wilhelm, 87509 Immenstadt (DE)
(74) Vertreter: Laufhütte, Dieter

(56) Entgegenhaltungen:
- DE-A1- 2 839 530
- DE-A1-102012 103 823
- JP-U- S5 532 374

## Beschreibung

Die Erfindung betrifft eine Fördereinrichtung zum Transport von Werkstückträgern nach dem Oberbegriff des Anspruchs 1.

In der Regel werden Werkstückträger in einer Fördereinrichtung von und zu einer oder mehreren Bearbeitungsstationen gefördert. Derartige Fördereinrichtungen umfassen eine stationäre Förderbahn mit mindestens einer Führungsschiene für die Werkstückträger und üblicherweise auch einen entsprechenden Antrieb zur Fortbewegung der Werkstückträger. Anstelle eines derartigen Antriebs kann aber auch ein Gefälle vorgesehen sein, sodass die Werkstückträger aufgrund der Schwerkraft fortbewegt werden. Um entsprechende Werkstückträger anhalten zu können sind Stoppeinrichtungen in der Förderbahn vorgesehen. Bei entsprechendem Anhalten der Werkstückträger können die auf diesen angeordneten Werkstücke entnommen und der Bearbeitungsstation, also beispielsweise einer Bearbeitungsmaschine, zugeführt werden.

Derartige Fördereinrichtungen sind schon bekannt. Als Stoppeinrichtung sind dort sogenannte Stoppfinger bekannt, die in der Führungsschiene ausfahrbar gelagert sind. Zum Stoppen eines Werkstückträgers ist dabei ein entsprechender Stoppfinger vorzusehen.

Häufig werden aber vor Bearbeitungsstationen mehrere Werkstückträger mit entsprechend zu bearbeitenden Werkstücken zugeführt, sodass sich vor einer Bearbeitungsstation eine Reihe von Werkstückträgern aufstauen. Hierin kann eine Art Zwischenspeicher gesehen werden, der dadurch bedingt ist, dass die Bearbeitungsstationen unterschiedliche Taktzeiten haben. Sobald ein Werkstückträger unmittelbar vor der Bearbeitungsstation anzuhalten ist, unterliegt die Stoppfunktion der Anforderung, einen einzelnen Werkstückträger anzuhalten. Sollen aber gezielt Werkstückträger aus der aufgestauten Reihe der Werkstückträger erfasst werden, die dann beispielsweise der Bearbeitungsstation zugeführt werden sollen, ist eine Vereinzelung vorzunehmen. Derartige Vorrichtungen zum Vereinzeln der Werkstückträger sind auch bereits bekannt. Hier müssen zwei Stoppfinger vorgesehen werden, wobei durch ein Eingreifen des jeweiligen Stoppfingers die Werkstückträger angehalten und/oder zurückgestaut werden können.

Die bekannten Stoppfinger sind üblicherweise derart konstruiert, dass sie bei entsprechender Ausfahrbewegung in die Führungsschiene eingreifen und die dort transportierten Werkstückträger als Anschlag anhalten. Dabei müssen die Stoppfinger vergleichsweise weite Ausfahrwege zurücklegen. Aus Sicherheitsgründen müssen sie beim Zurückfahren in die Ausgangsposition vollständig aus der Führungsschiene herausgefahren werden, um einen hinreichenden Abstand vom Werkstückträger zu erreichen. Üblicherweise sind die Stoppfinger in dem Boden der Führungsschiene absenkbar. Aufgrund der weiten Fahrwege ist nur eine vergleichsweise träge Reaktionszeit zum Anhalten der Werkstückträger realisierbar.

Aus der DE 28 39 530 A1 ist eine Montagestraße für Teile ektronischer und anderer Aurüstungsteile bekannt. Einzelne Artikel werden hier mittels zwei paralleler Förderbändern und einer Führungsschiene transportiert, wobei ein vertikal verschiebbarer Schwenkhebel zum Anhalten der transportierten Artikels dient. DE 28 39 530 A1 offenbart eine Fördereinrichtung nach dem Oberbegriff des Anspruchs 1.

Aus der JP S 55 323 744 ist weiterhin ein Anschlagmodul zum positionsgenauen Anhalten eines Gegenstandes bekannt. Dabei werden die sich auf einer Transportstrecke bewegenden Artikel mittels eines in der Führungsschien drehbar gelagerten Schwenkhebels, durch "Auflaufen" des Artekels auf den Schwenkhebel gestoppt. Die Rückkehr des Schwenkhebels in die Freigabestellung erfolgt durch "Verdrängen" des Schwenkhebels aufgrund der in Transportrichtung wirkenden Krafteinwirkung.

Die Aufgabe der vorliegenden Erfindung besteht darin, eine Fördereinrichtung zum Transport von Werkstückträgern nach dem Oberbegriff des Anspruchs 1 zu schaffen, welches ein zuverlässiges und sicheres sowie schnelles Anhalten von Werkstückträgern ermöglicht.

Erfindungsgemäß wird diese Aufgabe durch eine Fördereinrichtung mit den Merkmalen des Anspruchs 1 gelöst. Demnach ist eine Fördereinrichtung zum Transport von Werkstückträgern von und zu einer oder mehreren Bearbeitungsstationen vorgesehen, wobei die Fördereinrichtung einen Werkstückträger und eine stationäre Förderbahn mit mindestens einer Führungsschiene für die Werkstückträger aufweist, wobei mindestens eine Stoppeinrichtung zum Anhalten des Werkstückträgers vorgesehen ist. Erfindungsgemäß ist die Stoppeinrichtung als ein in der mindestens einen Führungsschiene integrierter Schwenkhebel ausgebildet, der zum Anhalten des Werkstückträgers aus einer Neutralstellung, in der er mit der Führungsschiene fluchtet, in eine aus der Führungsschiene ausgeschwenkte Stellung verschwenkbar ist.

Mit einer derartigen Fördereinrichtung sind sowohl das Stoppen, die Vereinzelung wie auch die Führung der Werkstückträger in sehr einfacher und sicherer Weise möglich. Durch das Vorsehen eines in die Führungsschiene integrierten Schwenkhebels als Stoppeinrichtung kann das Weiterfördern des Werkstückträgers sehr effizient und einfach dadurch verhindert werden, dass der Schwenkhebel aus seiner Neutralposition um einen kleinen Winkel verschwenkt wird, sodass er aus der Führungsschiene seitlich heraussteht und den Werkstückträger anhält. Durch diese kleine Verschwenkbewegung kann die Stoppeinrichtung insgesamt sehr feinfühlig und schnell reagieren.

Bevorzugte Ausgestaltungen der Erfindungen ergeben sich aus den sich an den Hauptanspruch anschließenden Unteransprüchen.

Gemäß der Erfindung weist der Werkstückträger an seiner der Führungsschiene zugewandten Seite mindestens eine der mindestens einen Führungsschiene entsprechende Führungsnut auf, wobei die mindestens eine Führungsnut unter Bildung einer Ausnehmung bereichsweise seitlich erweitert
ist, um so einen Anschlag für den bedarfsweise aus der Führungsschiene ausgeschwenkten Schwenkhebel zu bilden. Hierdurch wird ein unterseitiges Eingreifen in den Werkstückträger und ein entsprechendes Stoppen erreicht. Durch diese konstruktive Ausgestaltung kann das Verletzungsrisiko beispielweise durch ein Einquetschen während des Stoppvorganges abgesenkt werden. Darüber hinaus sind weniger Stoppfinger als herkömmlich vorzusehen.

Von Vorteil ist es, wenn der Bereich auf der der Führungsschiene zugewandten Seite, in der die Ausnehmung angeordnet ist, aus einem auswechselbaren separaten Teil besteht. Dieses Teil bildet ein Verschleißteil, das gegebenenfalls aus einem anderen, verschleißfesteren Material als der restliche Werkstückträger gebildet sein kann.

Der Werkstückträger kann vorteilhaft als Palette oder Adapterplatte ausgebildet sein. Paletten sind in diesem Zusammenhang reine Transportträger für Werkstücke. In ihrer Art und Beschaffenheit sind sie an die Transportsysteme angepasst. Derartige Paletten fördern die Werkstücke zu einer vordefinierten Position, sodass die Werkstücke entnommen werden können, während die Paletten auf der Führungsschiene verbleiben. Adapterplatten werden dagegen nicht nur zum Transport verwendet, sondern stellen einen Teil einer Bearbeitungsmaschine dar. So werden sie mit dem oder den auf Ihnen befindlichen Werkstücken in der Bearbeitungsstation eingespannt. Während die Werkstückträger hinsichtlich der Gestaltung ihrer Gleitschienen, Spannelemente und Montageträger festgelegt sind, haben sie hinsichtlich der Gestaltung ihrer Unterseite, an der die vorteilhafte Ausnehmung vorzusehen ist, jegliche Gestaltungsfreiheit.

Der Schwenkhebel kann vorteilhaft entsprechend dem Gewicht der anzuhaltenden Werkstückträger dadurch in seiner Größe angepasst sein, dass seine Stärke, die der überbrückten Länge der Lücke in der Führungsschiene entspricht, variiert wird. Somit kann in sehr einfacher Weise an der Führungsschiene zur Bildung eines stärker dimensionierten Schwenkhebels einfach ein längerer Abschnitt ausgespart sein, in den der entsprechend dicker ausgeführte Schwenkhebel eingreift. Dadurch kann der Schwenkhebel sehr einfach an das Beladegewicht des einen oder der mehreren anzuhaltenden Werkstückträger angepasst werden.

Vorteilhaft kann ein erster Sensor zur Erfassung des Herannahens des Werkstückträgers an die vorgesehene Stoppposition vorgesehen sein, über den ein Aktivierungssignal zum Ausschwenken des Schwenkhebels aktivierbar ist.

Über einen zweiten Sensor kann das Erreichen einer gewünschten Stoppposition des Werkstückträgers vorteilhaft überprüft werden.

Gemäß einer weiteren bevorzugten Ausführungsform kann ein dritter Sensor vorgesehen sein. In dieser Ausführungsform dient der erste Sensor wieder zur Aktivierung des Schwenkhebels dienen. Der zweite Sensor dient zur präzisen Positionierung des Werkstückträgers, während der dritte Sensor als Kontrollsensor fungiert.

Als besonders geeignet kann zumindest einer der vorgenannten Sensoren als Lichtschranke ausgeführt sein.

Gegenstand der Erfindung ist auch ein Verfahren zum Anhalten eines Werkstückträgers in einer Fördereinrichtung der vorgenannten Art, wobei über mindestens einen Sensor die Position des Werkstückträgers ermittelt wird und wobei der Schwenkhebel in Abhängigkeit von den aufgenommenen Sensorsignalen wahlweise angesteuert wird, wenn der Werkstückträger angehalten werden soll. Durch diese Verfahren wird ein sicheres und zuverlässiges Anhalten des Werkstückträgers erreicht.

Weitere Merkmale, Einzelheiten und Vorteile der Erfindung ergeben sich aus der nachfolgenden Beschreibung eines in der Zeichnung dargestellten bevorzugten Ausführungsbeispiels der vorliegenden Erfindung.

Es zeigen:
- Fig. 1:: eine perspektivische Ansicht einer Ausführungsform eines Werkstückträgers für eine erfindungsgemäße Fördereinrichtung,
- Fig. 2:: eine perspektivische Ansicht einer Förderbahn mit einer inaktiven Stoppeinrichtung,
- Fig.3:: eine perspektivische Ansicht gemäß Fig. 2 einer Förderbahn mit einer Stoppeinrichtung nach ihrer Aktivierung und
- Fig. 3a:: eine vergrößerte Darstellung der Fig. 3.

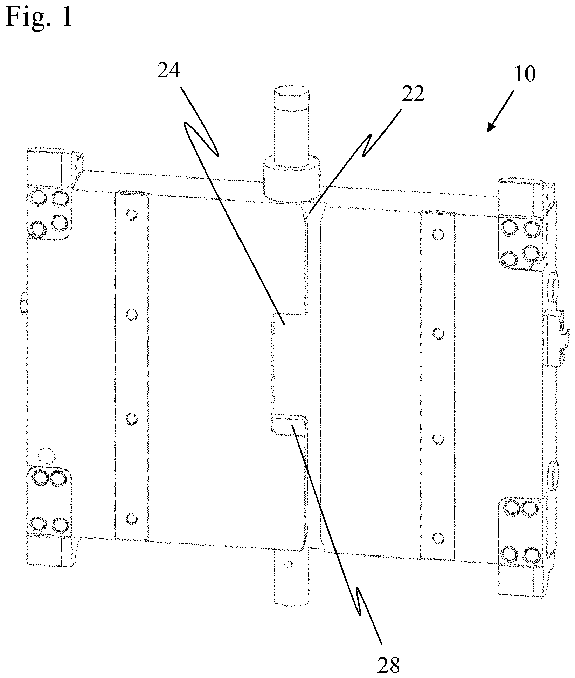

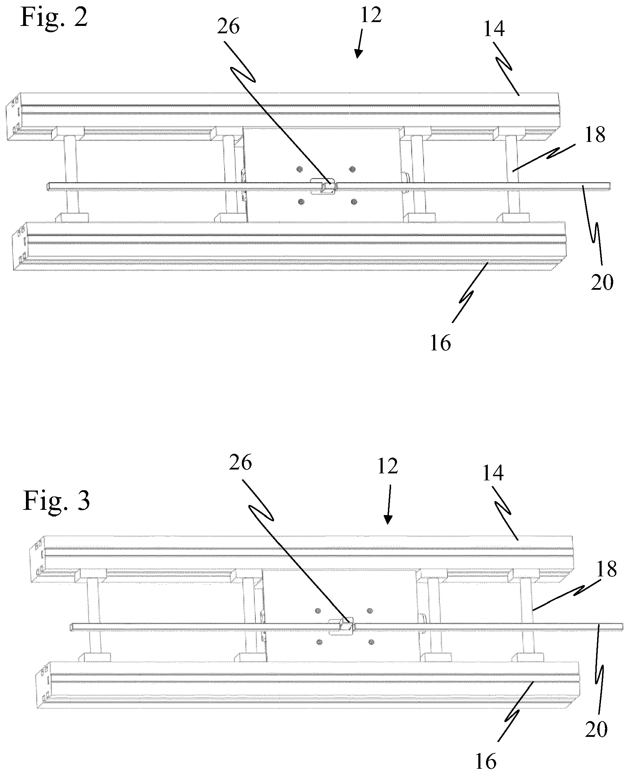

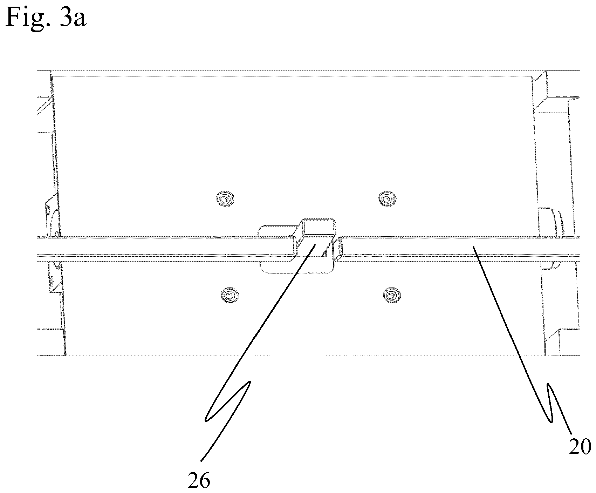

In den Figuren ist eine bevorzugte Ausführungsform der erfindungsgemäßen Fördereinrichtung gezeigt. Die Figuren 1 bis 3a zeigen hier jeweils Teile der Fördereinrichtung. Während in der Figur 1 ein Werkstückträger 10 üblichen Aufbaus gezeigt ist, sind in den Figuren 2 und 3 bzw. 3a jeweils Darstellungen ein und derselben Förderbahn 12 gezeigt, auf denen ein entsprechender Werkstückträger 10 verläuft (hier nicht dargestellt).

Die Förderbahn 12 weist jeweils zwei seitliche Wangenteile 14 und 16 auf, die durch Querstreben 18 miteinander verbunden sind. Ungefähr mittig zwischen den entsprechenden Wangenteilen 14 und 16 verläuft im hier dargestellten Ausführungsbeispiel eine Führungsschiene 20. Der Werkstückträger 10 gemäß Figur 1 wird entlang der Förderbahn 12 mit einer hier nicht näher dargestellten Antriebsvorrichtung gefördert. Zur Führung weist der Werkstückträger eine auf seiner der Führungsschiene 20 zugewandten Seite angeordnete Führungsnut 22 auf. Diese Führungsnut 22 umschließt also im montierten Zustand die Führungsschiene 20 der Förderbahn 12. Mittels der Führungsnut 22 ist eine zuverlässige und sichere Führung des Werkstückträgers 10 auf der Führungsschiene 20 der Förderbahn 12 gewährleistet. Im montierten Zustand verläuft die Führungsschiene 20 somit unterhalb des Werkstückträgers 10. Damit ist der Werkstückträger 10 von drei Seiten zugänglich, was zu einer deutlich verbesserten Bedienung bzw. Handhabung führt.

Die Führung des Werkstückträgers an den Außenseiten ist nicht mehr erforderlich, da diese vollständig von der nahezu mittig angeordneten Führungsschiene 20 ersetzt wird. Durch das Ersetzen von seitlichen Führungselementen ist der Werkstückträger 10 somit von allen Seiten frei zugänglich und bietet eine vereinfachte Handhabung des Werkstückträgers bzw. des von diesem getragenen Werkstücks. Dieses kann bspw. mittels eines Greifers wesentlich einfacher gegriffen werden. Zudem könnten bspw. zumindest ein seitlich angebrachter Datenträger mit Werkstück und/oder bearbeitungsrelevanten Daten in einfacher Weise am Werkstückträger 10 angebracht werden. Dies ist in der Darstellung nicht wiedergegeben. Auch können hier ebenfalls nicht näher dargestellte Einspannelemente beliebig seitlich angeordnet werden.

Die Führungsnut 22 des Werkstückträgers 10 weist in der in Figur 1 dargestellten Arte und Weise eine Ausnehmung 24 auf, die die Führungsnut 22 seitlich erweitert. Hierdurch wird ein Anschlag für ein entsprechendes führungsbahnseitiges Stoppelement gebildet. Das entsprechende Stoppelement besteht aus einem in der Förderbahn 12 verschwenkbar angeordneten Schwenkhebel 26. Dieser Schwenkhebel 26 ist mit einem Schwenkmechanismus verbunden, der ein geringfügiges Auslenken des in seiner Neutralstellung mit der Führungsschiene 20 fluchtenden Schwenkhebels 26 ermöglicht.

In Figur 2 ist der Schwenkhebel 26 in seiner Neutralstellung, d.h. in der mit der Führungsschiene 20 fluchtenden Stellung, gezeigt. In der Figur 3 ist der Schwenkhebel 26 dagegen in seiner ausgelenkten Stellung gezeigt, in der er neben der Führungsschiene zu liegen kommt. In dieser Stellung würde der Schwenkhebel 26 in eine entsprechende Ausnehmung 24 des Werkstückträgers 10, der hierzu natürlich auf der Förderbahn 12 geführt sein muss, eingreifen. Der ausgelenkte Schwenkhebel 26 würde entsprechend der Positionierung in Figur 3 an einem Anschlag 28 in der Ausnehmung 24 anschlagen. Die Figur 3a zeigt eine vergrößerte Darstellung des Schwenkhebels 26 in ausgeschwenkter Stellung entsprechend der Figur 3.

Um hier eine Beschädigung durch das Eingreifen des Schwenkhebels 26 zu vermeiden, ist in der Aussparung 24 ein wechselbares Teil 28 aus einem verschleißfesten Material angeordnet. Anstelle dieses Einsatzes 28 kann auch der Gesamtbereich 24 aus einem entsprechenden Material bestehen und eingesetzt werden. Das wechselbare Teil 28 kann in beliebiger Weise befestigt sein. Hierzu sind verschiedene Fügemethoden denkbar, bspw. ein Einkleben, Einschweißen, Hartlöten und/oder Einschrauben.

Wie aus den Figuren 2 und 3 zu ersehen ist, wird der Schwenkhebel 26 um einem so geringen Weg ausgelenkt, dass nur ein sehr geringer Spalt entsteht. Der Spalt ist dabei so klein dimensioniert, dass eine eventuelle Quetschung der Hand oder eines Fingers des Bedienpersonals sicher verhindert werden kann.

Der Schwenkhebel 26 kann auch aus einem besonders festen Material hergestellt werden. Dieses kann sich in der Festigkeit von dem übrigen Material, aus dem die Führungsschiene 20 besteht, unterscheiden.

Mit der einfachen Stoppfunktion durch den Schwenkhebel kann aufgrund des einfachen Aufbaus eine Fehlbedienung weitgehend verhindert werden. Durch die beiden Schwenkmöglichkeiten gibt es lediglich die Unterscheidung zweier Stellungen, nämlich der Förderstellung gemäß Figur 2 und der Sperrstellung gemäß Figur 3.

Im hier vorliegenden Ausführungsbeispiel ist eine Ausführungsform mit einer Führungsschiene 20 gezeigt. Anstelle dieser Ausführung ist aber auch eine Ausführungsform denkbar, welche zwei parallele Führungsschienen 20 aufweist. Mittels eines jeweiligen an diesen Führungsschienen 20 befestigten Schwenkhebels 26 können auch schwere Werkstückträger 10 sicher angehalten werden. Zwei Führungsschienen werden insbesondere auch dann vorgesehen, wenn eine mittige Anordnung einer Führungsschiene 20 nicht möglich ist und/oder wenn hier besonders schwere Werkstückträger 10 eingesetzt werden.

Je nach Einsatzgebiet ist auch eine einseitige seitliche Führung möglich. Eine Führungsschiene kann aber auch als eine Blende bzw. Schutzleiste ausgebildet sein, um den Schwenkhebel 26 abzuschirmen.

## Patentansprüche

1. Fördereinrichtung zum Transport von Werkstückträgern **(10)** von und zu einer oder mehreren Bearbeitungsstationen, wobei die Fördereinrichtung einen Werkstückträger und eine stationäre Förderbahn **(12)** mit mindestens einer unterhalb des Werkstückträgers **(10)** verlaufenden Führungsschiene **(20)** für die Werkstückträger **(10)** aufweist, wobei mindestens eine Stoppeinrichtung zum Anhalten des Werkstückträgers **(10)** vorgesehen ist, **dadurch gekennzeichnet, dass** die Stoppeinrichtung als ein in der mindestens einen Führungsschiene **(20)** integrierter Schwenkhebel **(26)** ausgebildet ist, der zum Anhalten des Werkstückträgers **(10)** aus einer Neutralstellung, in der er mit der Führungsschiene **(20)** fluchtet, in eine aus der Führungsschiene **(20)** ausgeschwenkte Stellung verschwenkbar ist, und, dass der Werkstückträger **(10)** an seiner der Führungsschiene **(20)** zugewandten Seite mindestens eine der mindestens einen unterhalb des Werkstückträgers **(10)** verlaufenden Führungsschiene **(20)** entsprechende Führungsnut **(22)** aufweist, wobei die mindestens eine Führungsnut **(22)** unter Bildung einer Ausnehmung **(24)** bereichsweise seitlich erweitert ist, um so einen Anschlag **(28)** für den bedarfsweise aus der Führungsschiene **(20)** ausgeschwenkten Schwenkhebel **(26)** zu bilden.

2. Fördereinrichtung nach Anspruch 1, **dadurch gekennzeichnet, dass** der Bereich auf der der Führungsschiene **(20)** zugewandten Seite, in dem die Ausnehmung **(24)** angeordnet ist, aus einem auswechselbaren separaten Teil besteht.

3. Fördereinrichtung nach Anspruch 2, **dadurch gekennzeichnet, dass** das auswechselbare Teil aus einem verschleißfestem Material besteht.

4. Fördereinrichtung nach einem der vorhergehenden Ansprüche, **dadurch gekennzeichnet, dass** der Werkstückträger **(10)** als Palette oder Adapterplatte ausgebildet ist.

5. Fördereinrichtung nach einem der vorhergehenden Ansprüche, **dadurch gekennzeichnet, dass** der Schwenkhebel **(26)** entsprechend dem Gewicht der anzuhaltenden Werkstückträger **(10)** dadurch in seiner Größe angepasst ist, dass seine Stärke, die der überbrückten Länge der Lücke in der Führungsschiene **(20)** entspricht, variiert wird.

6. Fördereinrichtung nach einem der vorhergehenden Ansprüche, **dadurch gekennzeichnet, dass** ein erster Sensor zur Erfassung des Herannahens des Werkstückträgers **(10)** an die vorgesehene Stoppposition vorgesehen ist, über den ein Aktivierungssignal zum Ausschwenken des Schwenkhebels **(26)** aktivierbar ist.

7. Fördereinrichtung nach einem der vorhergehenden Ansprüche, **dadurch gekennzeichnet, dass** ein weiterer Sensor zur Kontrolle des Erreichens einer gewünschten Stoppposition des Werkstückträgers **(10)** vorgesehen ist, wobei gegebenenfalls ein zusätzlicher Sensor für eine präzise Positionierung des Werkstückträgers **(10)** vorgesehen ist.

8. Fördereinrichtung nach Anspruch 6 oder 7, **dadurch gekennzeichnet, dass** der Sensor als Lichtschranke ausgeführt ist.

9. Verfahren zum Anhalten eines Werkstückträgers **(10)** in einer Fördereinrichtung gemäß einem der Ansprüche 1 bis 8, **dadurch gekennzeichnet, dass** über mindestens einen Sensor die Position des Werkstückträgers **(10)** ermittelt wird und dass der Schwenkhebel **(26)** in Abhängigkeit von den aufgenommenen Sensorsignalen wahlweise angesteuert wird, wenn der Werkstückträger **(10)** angehalten werden soll.

## Claims

1. A conveying device for the transport of workpiece carriers (10) from and to one or more machining stations, wherein the conveying device has a workpiece carrier and a stationary conveyor track (12) having at least one guide rail (20) for the workpiece carrier (10) extending beneath the workpiece carrier (10), wherein at least one stopping device is provided for stopping the workpiece carrier (10),
**characterized in that**
the stopping device is formed as a pivot lever (26) that is integrated in the at least one guide rail (20) and that is pivotable for stopping the workpiece carrier (10) from a neutral position in which it is aligned with the guide rail (10) into a position pivoted outwardly out of the guide rail (20); and **in that** the workpiece carrier (10) has at least one guide groove (22) corresponding to the at least one guide rail (20) extending beneath the workpiece carrier (10) at its side facing the guide rail (20), wherein the at least one guide groove (22) is regionally laterally broadened while forming a recess (24) in order thus to form an abutment (28) for the pivot lever (26) pivoted outwardly out of the guide rail (20) as required.

2. A conveying device in accordance with claim 1, **characterized in that** the region on the side facing the guide rail (20) and in which the recess (24) is arranged comprises a replaceable separate part.

3. A conveying device in accordance with claim 2, **characterized in that** the replaceable part comprises a wear-resistant material.

4. A conveying device in accordance with one of the preceding claims, **characterized in that** the workpiece carrier (10) is configured as a pallet or as an adapter plate.

5. A conveying device in accordance with one of the preceding claims, **characterized in that** the size of the pivot lever (26) is adapted in accordance with the weight of the workpiece carriers (10) to be stopped **in that** its thickness that corresponds to the bridged length of the gap in the guide rail (20) is varied.

6. A conveying device in accordance with one of the preceding claims, **characterized in that** a first sensor is provided for detecting the approach of the workpiece carrier (10) to the provided stopping position and an activation signal for outwardly pivoting the pivot lever (26) can be activated via it.

7. A conveying device in accordance with one of the preceding claims, **characterized in that** a further sensor is provided for monitoring the reaching of a desired stopping position of the workpiece carrier (10), with an additional sensor optionally being provided for a precise positioning of the workpiece carrier (10).

8. A conveying device in accordance with claim 6 or claim 7, **characterized in that** the sensor is configured as a light barrier.

9. A method of stopping a workpiece carrier (10) in a conveying device in accordance with one of the claims 1 to 8, **characterized in that** the position of the workpiece carrier (10) is determined via at least one sensor; and **in that** the pivot lever (26) is selectively controlled in dependence on the received sensor signals when the workpiece carrier (10) is to be stopped.

## Revendications

1. Convoyeur-transporteur pour le transport de porte-pièces (10) depuis ou jusqu'à un ou plusieurs postes de travail, le convoyeur-transporteur comportant un porte-pièces et une voie de convoyage (12) stationnaire comprenant au moins un rail de guidage (20) pour les porte-pièces (10) s'étendant sous le porte-pièce (10), au moins un dispositif d'arrêt étant prévu pour arrêter le porte-pièces (10), **caractérisé en ce que** le dispositif d'arrêt se présente sous la forme d'un levier pivotant (26) intégré dans l'au moins un rail de guidage (20), ledit levier pivotant pouvant être pivoté d'une position neutre, dans laquelle il est de niveau avec le rail de guidage (20), à une position pivotée hors du rail de guidage (20) pour arrêter le porte-pièce (10), et
**en ce que** le porte-pièces (10) comporte, sur son côté orienté vers le rail de guidage (20), au moins une rainure de guidage (22) correspondant à l'au moins un rail de guidage (20) s'étendant sous le porte-pièces (10), l'au moins une rainure de guidage (22) étant élargie latéralement sur certaines parties en formant un évidement (24), pour former ainsi une butée (28) pour le levier pivotant (26) pivoté hors du rail de guidage (20) en cas de besoin.

2. Convoyeur-transporteur selon la revendication 1, **caractérisé en ce que** la zone sur le côté orienté vers le rail de guidage (20), dans laquelle l'évidement (24) est placé, est constituée d'une pièce séparée remplaçable.

3. Convoyeur-transporteur selon la revendication 2, **caractérisé en ce que** la pièce remplaçable est constituée d'un matériau résistant à l'usure.

4. Convoyeur-transporteur selon l'une des revendications précédentes, **caractérisé en ce que** le porte-pièces (10) est réalisé sous la forme d'une palette ou d'une plaque d'adaptation.

5. Convoyeur-transporteur selon l'une des revendications précédentes, **caractérisé en ce que** la grandeur du levier pivotant (26) est adaptée en fonction du poids des porte-pièces (10) à arrêter par le fait que son épaisseur, qui correspond à la longueur franchie du trou dans le rail de guidage (20), est modifiée.

6. Convoyeur-transporteur selon l'une des revendications précédentes, **caractérisé en ce qu'**un premier capteur, par le biais duquel un signal d'activation peut être activé pour faire sortir en le pivotant le levier pivotant (26), est prévu pour détecter l'approche par le porte-pièces (10) de la position d'arrêt prévue.

7. Convoyeur-transporteur selon l'une des revendications précédentes, **caractérisé en ce qu'**un autre capteur est prévu pour contrôler l'atteinte d'une position d'arrêt souhaitée du porte-pièces (10), un capteur supplémentaire étant prévu le cas échéant pour un positionnement précis du porte-pièces (10).

8. Convoyeur-transporteur selon la revendication 6 ou 7, **caractérisé en ce que** le capteur est réalisé sous la forme d'une barrière photo-électrique.

9. Procédé pour arrêter un porte-pièces (10) dans un convoyeur-transporteur selon l'une des revendications 1 à 8, **caractérisé en ce que** la position du porte-pièces (10) est déterminée par le biais d'au moins un capteur et **en ce que** le levier pivotant (26) est commandé à convenance en fonction des signaux de capteur reçus quand le porte-pièces (10) doit être arrêté.
